# EUROPÄISCHE PATENTSCHRIFT

(11) **EP 3 855 342 B1**
(45) Veröffentlichungstag und Bekanntmachung des Hinweises auf die Patenterteilung: **15.12.2021**
(21) Anmeldenummer: 20153885.7
(22) Anmeldetag: 27.01.2020
(51) Int. Cl.: G06K 7/14, G06K 7/10

(54) **LESEN VON OPTISCHEN CODES**
READING OF OPTICAL CODES
LECTURE DE CODES OPTIQUES

(43) Veröffentlichungstag der Anmeldung: 28.07.2021
(73) Patentinhaber: SICK AG, 79183 Waldkirch (DE)
(72) Erfinder: Burghardt, Sascha, 79183 Waldkirch (DE); Stawiaski, Jean, 79199 Kirchzarten (DE)

(56) Entgegenhaltungen:
- EP-A1- 3 163 497
- EP-A1- 3 309 703
- EP-A2- 0 736 835

## Beschreibung

Die Erfindung betrifft ein Verfahren und eine Codelesevorrichtung zum Lesen von optischen Codes, insbesondere 2D-Codes, mit Verzerrungen durch einen unebenen Untergrund des Codes nach dem Oberbegriff von Anspruch 1 beziehungsweise 14.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die Code tragenden Objekte an dem Codeleser vorbei gefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen. Ebenso bekannt ist, die Lesefelder von mehreren Codelesern zu kombinieren, um beispielsweise ein breiteres Förderband abzudecken.

Es kommt immer wieder vor, dass die Codes nur verzerrt aufgenommen werden. Eine Ursache dafür ist die Anbringung auf nicht planaren Oberflächen. Das kann Knicke, Wölbungen und letztlich völlig zufällige geometrische Verzerrungen zur Folge haben. Dieses Problem tritt unabhängig von der Art auf, wie die Codes erzeugt sind, sei es durch Aufdruck, Einprägen von Codemarkierungen, Aufkleben von Codeetiketten oder eine andere Weise.

Nun sind in den verschiedenen 2D-Codespezifikationen Fehlerkorrekturmechanismen eingebaut. Sie sind aber nicht so aufgebaut, dass komplexe Deformationen detektierbar wären, sondern implizit wird ein allenfalls geringer Einfluss einer nicht planaren Oberfläche vorausgesetzt. Es gibt jedoch Anwendungen, in denen diese stille Voraussetzung nicht nur im Einzelfall nicht erfüllt ist. Ein typisches Beispiel sind Codes auf weichen Verpackungen wie Plastikhüllen. Dann kommen die vorgesehenen Mechanismen, wie eine Reed-Solomon-Fehlerkorrektur, schnell an ihre Grenzen, und ab einer gewissen Verformung sind die 2D-Codes nicht mehr lesbar.

Im Stand der Technik wird zum Teil versucht, das aufgenommene Bild des Codes vor dem eigentlichen Codelesen zu entzerren. Das betrifft dann jedoch nicht den konkreten Code und dessen Untergrund, wie bei einer Korrektur von Abbildungsfehlern des Codelesers oder einer Umrechnung der Aufnahmeperspektive. Die US 7 878 402 B2 oder die EP 2 843 616 A1 beschreiben eine entsprechende perspektivische Transformation. Dabei gilt aber erneut die Annahme, dass der Code in sich eben und lediglich aus einer schrägen Perspektive aufgenommen ist. Individuelle geometrische Verzerrungen innerhalb der Codes führen daher weiterhin zu Lesefehlern. Die US 8 235 296 B2 befasst sich mit einer komplementären Fragestellung, einen Code auf eine gekrümmte Oberfläche zu schreiben. Dazu wird die Oberfläche allerdings dreidimensional vermessen, was einen erheblichen Aufwand bedeutet. Zudem funktioniert das auch nur bei bestimmten regelmäßigen Geometrien, wie einem Zylinder, und schon gar nicht bei Verformungen, die sich ständig ändern, wie im Falle eines weichen Untergrundes.

Ein weiterer herkömmlicher Ansatz besteht darin, die geometrische Struktur eines zu lesenden Codes global zu erfassen, etwa anhand einer konvexen Hülle. In manchen Fällen geringer und vor allem regelmäßiger Verzerrungen ist das eine Möglichkeit, aber beispielsweise bei einer verknitterten Plastikhülle als Untergrund enthält die globale Geometrie einfach zu wenig Information, und das Lesen des Codes scheitert weiterhin.

Aus der EP 0 736 835 A1 ist ein Verfahren zum Lesen eines Dot-Matrix-Codes bekannt. Dabei wird zunächst die Aufnahme des Codes mit einer erwarteten Anordnung von Dots korreliert, um so die Dots des Codes aufzufinden. Dann wird der zentrale Dot gesucht und davon ausgehend ein Gitter mit je zehn Zellen nach oben, unten, rechts und links aufgespannt. Das entstehende Gitter, dessen Zellen jeweils mit Dots belegt sind oder nicht, wird zum Decodieren mit bekannten und zulässigen Codes verglichen.

Die EP 3 309 703 A1 befasst sich mit dem Decodieren von QR-Codes basierend auf einer gewichteten Mittelwertbildung von Grauwerten.

Es ist daher Aufgabe der Erfindung, ein verbessertes Verfahren zum Lesen eines verzerrten optischen Codes anzugeben.

Diese Aufgabe wird durch ein Verfahren und eine Codelesevorrichtung zum Lesen von optischen Codes mit Verzerrungen durch einen unebenen Untergrund des Codes nach Anspruch 1 beziehungsweise 14 gelöst. Die Codes sind durch ihren nicht planen, gekrümmten oder deformierten Untergrund, durch Knicke, Wölbungen oder sonstige geometrische Eigenschaften verzerrt und dementsprechend zunächst schwerer oder gar nicht lesbar. Der optische Code ist insbesondere ein zweidimensionaler Code nach einem der diversen bekannten Standards. Es werden Bilddaten erzeugt, die den Code enthalten und vorzugsweise zumindest grob segmentiert und damit auf den Codebereich zugeschnitten sind. Bilddaten werden typischerweise mit einem Bildsensor eines kamerabasierten Codelesers aufgenommen, wobei prinzipiell auch ein Codescanner zeilenweise ein Intensitätsprofil erfassen und auf diese Weise Bilddaten erzeugen kann. Der Code wird mit einem an sich bekannten Decodierverfahren gelesen.

Die Erfindung geht von dem Grundgedanken aus, vor dem eigentlichen Codelesen ein Abtastmuster oder Abtastgitter aus Abtastpunkten zu erzeugen, das sich den Verformungen des Untergrundes des Codes anpasst. Die Bilddaten an diesen Abtastpunkten werden dann für das Codelesen verwendet. Das Abtastmuster ist folglich kein regelmäßiges Gitter, sondern zumindest näherungsweise ebenso verzerrt wie der Code selbst.

Die Erfindung hat den Vorteil, dass das Abtastmuster die Deformation abbildet und dadurch kompensiert. Der Code kann dann selbst bei starker und unregelmäßiger Deformation noch gelesen und damit die Leserate erhöht werden. Natürlich gibt es Grenzen, etwa wenn Codes derart gefaltet sind, dass ganze Bereiche verdeckt werden. Das Vorgehen funktioniert bei verschiedensten Codearten. Selbst bei anspruchsvollen Anwendungen, wie Folienverpackungen, wird damit eine hohe Leserate erreicht.

Das Abtastmuster wird vorzugsweise ohne Kenntnis der Krümmung des unebenen Untergrundes bestimmt. Es stehen außer den Bilddaten keine weiteren Informationen zur Verfügung, insbesondere keine dreidimensionale Konturvermessung. Die zu korrigierende Geometrie ist vorab unbekannt und wird auch während des Verfahrens nicht bestimmt. Vielmehr passt sich das Abtastmuster lokal an den verzerrten Code an.

Vorzugsweise wird eine Modulgröße des Codes und/oder eine Größe des benötigten Abtastmusters aus einem Finder Pattern bestimmt. Ein Finder Pattern ist ein Teil eines 2D-Codes mit einem spezifischen Muster, an dem der 2D-Code und bestimmte Eigenschaften davon erkannt werden. Es ist daher aus der Codespezifikation bekannt, welche Codeelemente oder Module das Finder Pattern aufweist, und so kann auf die Modulgröße in dem konkret aufgenommenen Code geschlossen werden. Durch Hochrechnen auf den erfassten Codebereich lässt sich weiterhin ableiten, wie viele Abtastpunkte das Abtastmuster insgesamt umfassen muss, um den Code zu überdecken. Bei einem QR-Code steht dafür zusätzlich der Abstand zwischen den Finder Pattern, bei einem DataMatrix-Code die Länge der hier den Code von zwei Seiten vollständig einrahmenden Finder Pattern zur Verfügung.

Das Abtastmuster weist vorzugsweise einen Abtastpunkt je Modul des Codes auf. Mindestens ein Abtastpunkt sollte vorhanden sein, da sonst einige Moduln überhaupt nicht repräsentiert werden. Es reicht aber umgekehrt auch ein Abtastpunkt aus, denn jedes Modul trägt abgesehen von seine 2D-Lage nur die Hell-Dunkel-Information in sich, die durch einen repräsentativ platzierten Abtastpunkt vollumfänglich erfasst ist. Ein Abtastmuster mit mindestens einem Abtastpunkt je Modul ist daher ausreichend, ein Abtastmuster mit genau einem Abtastpunkt sogar eine optimale, immer noch vollständige Konfiguration ohne unnötigen Aufwand.

Das Abtastmuster wird vorzugsweise iterativ von einem Finder Pattern ausgehend vergrößert, bis es den Code überdeckt. Das Finder Pattern lässt sich verlässlich lokalisieren. Von diesem anfänglichen kleinen Abtastmuster wird dann das gesamte Abtastmuster durch schrittweise Vergrößerung aufgebaut ("Grid Growing").

Vorzugsweise werden anfänglich Abtastpunkte des Abtastmusters für das Finder Pattern festgelegt, insbesondere noch in regelmäßiger Anordnung entsprechend einem planen Untergrund. Dank seines spezifizierten Aufbaus ist für das Finder Pattern bekannt, welche Moduln es enthält. Daher kann hier ein Anfang des Abtastmusters besonders verlässlich gesetzt und angepasst werden. Beispielsweise umfasst ein Finder Pattern eines QR-Codes 7x7 Moduln aus ineinander angeordneten Rechtecken. Dementsprechend kann mit einem Abtastmuster aus 7x7 Abtastpunkten begonnen werden. Bei der Initialisierung wird vorzugsweise zunächst ein regelmäßiges Abtastmuster verwendet, da vorab keinerlei Informationen über die Verzerrungen bekannt sind.

Vorteilhafterweise werden die Abtastpunkte jeweils ins Zentrum des von ihnen repräsentierten Moduls verschoben. Bei einem nicht verzerrten, ebenen Code wäre das mit einem regelmäßigen Abtastmuster mit konstantem Abstand zwischen den Abtastpunkten entsprechend der geschätzten Modulgröße sehr einfach durch eine allgemeine Zentrierung zu realisieren. Für die Anpassung an unebene Untergründe werden die Abtastpunkte individuell verschoben, um die jeweilige lokale Verzerrung auszugleichen. Das Zentrum muss keineswegs der exakte geometrische Schwerpunkt eines Moduls sein, es geht nur darum, die Kanten zwischen den Moduln verlässlich zu meiden, damit der Abtastpunkt einen für das Modul repräsentativen Helligkeitswert erfasst.

Vorzugsweise wird ein Gradientenbild und ein Magnitudenbild des Codes berechnet, um anhand des Magnitudenbildes festzustellen, ob ein jeweiliger Abtastpunkt in einem lokalen Extremum liegt und die Richtung einer noch erforderlichen Verschiebung aus dem Gradientenbild zu bestimmen. Konkret kann ein Bild für die Magnitude und jeweils ein Bild für den Gradienten in X- und Y-Richtung bestimmt werden. Der Gradient, der ja ein Vektor ist, wird folglich in seine Richtungen und seinen Betrag zerlegt. In diesem Zusammenhang ist Bild ein Begriff für eine beliebige Repräsentation des Gradienten. Es genügt, diese Gradientenberechnung ein einziges Mal für die Bilddaten des Codebereichs durchzuführen, das Ergebnis kann dann in sämtlichen Iterationen und für alle Abtastpunkte verwendet werden. Ein Abtastpunkt wird als hinreichend in seinem Modul zentriert angesehen, wenn die Magnitude ein lokales Extremum anzeigt, mit anderen Worten zumindest nahe bei Null liegt. Das ist eine mathematische Formulierung dessen, dass der Abtastpunkt hinreichend weit von Kanten zwischen den Moduln entfernt ist und damit sozusagen mitten in dem hellen beziehungsweise dunklen Bereich des Moduls liegt. Das Gradientenbild zeigt die Richtung an, in welcher das lokale Extremum liegt, wenn die Magnitudenbedingung noch nicht erfüllt ist.

Eine Verschiebung wird vorzugsweise in Schritten kleiner als die Modulgröße versucht, bis ein lokales Extremum erreicht ist, die Verschiebung aus dem Modul herausführen würde oder eine Maximalzahl von Schritten versucht wurde, wobei insbesondere keine Verschiebung des jeweiligen Abtastpunktes erfolgt, wenn kein lokales Extremum gefunden werden konnte. Dabei wird das lokale Extremum durch ein iteratives Verfahren gesucht. Die Schrittgröße ist klein gewählt, damit kein falsches lokales Extremum in einem anderen Modul gefunden wird, was sonst insbesondere bei mehreren benachbarten hellen beziehungsweise dunklen Moduln passieren könnte. Führt eine Verschiebung weiter als die geschätzte Modulgröße, so wird abgebrochen. Es wird dann vorzugweise nicht mit der bisher bestimmten Verschiebung weitergearbeitet, die vermutlich kein sinnvolles Ergebnis darstellt, sondern dieser Abtastpunkt vorerst gar nicht verschoben.

Vorteilhafterweise wird eine Verschiebematrix von Verschiebungen der jeweiligen Abtastpunkte in ein lokales Extremum geglättet, insbesondere mit einem Gaussfilter. Es werden also Verschiebungen für die einzelnen Abtastpunkte bestimmt und in die Verschiebematrix geschrieben. Wie soeben erläutert, wird für manche Abtastpunkte keine geeignete Verschiebung gefunden, und sie verbleiben in ihrer Ausgangsposition. Durch das Glätten der Verschiebematrix werden also nicht nur die gefundenen Verschiebungen einem gewissen gegenseitigen Ausgleich unterworfen, sondern auch diejenigen Abtastpunkte über ihre Nachbarn angepasst, die sonst in ihrer Ausgangsposition verblieben wären.

Vorzugsweise wird iterativ so lange eine neue Verschiebematrix mit Verschiebungen von Abtastpunkten in ein lokales Extremum bestimmt und jeweils auf das Abtastmuster angewandt, bis eine weitere Verschiebematrix keine Verschiebungen oberhalb einer Toleranzschwelle mehr bewirkt oder bis eine maximale Anzahl Iterationen erreicht ist. Die Verschiebungen werden solange wiederholt, bis das Verfahren konvergiert und keine Verbesserungen mehr erreicht werden. Vorsichtshalber sollte noch eine Abbruchbedingung nach einer bestimmten Anzahl von Schritten vorgesehen sein, womit auch eine sonstige von außen vorgegebene Bedingung wie der Ablauf einer maximal zur Verfügung stehende Rechenzeit umfasst sein soll.

Das Abtastmuster wird vorzugsweise iterativ an mindestens einem Rand mit zusätzlichen Abtastpunkten vergrößert, bis es den Code überdeckt und/oder eine vorgegebene Größe erreicht. Vorzugsweise wächst das Abtastmuster pro Iteration jeweils um eine Spalte und/oder Zeile. Es ist denkbar, mehrere Zeilen oder Spalten auf einmal hinzuzufügen, aber bei starker Variation der lokalen Krümmung verschlechtert das die Anpassung. Nachdem das Abtastmuster auf diese Weise gewachsen ist, werden die hinzugefügten Abtastpunkte, sämtliche Abtastpunkte oder eine Zwischenmenge, wie die hinzugekommenen Abtastpunkte und deren Nachbarn aus dem schon zuvor bestehenden Abtastmuster, vorzugsweise der beschriebenen Anpassung zum Zentrieren in ihren jeweiligen Moduln unterworfen. Das Wachsen und damit das Verfahren zum Erzeugen des angepassten Abtastmusters ist beendet, wenn der Code überdeckt ist. Das wird insbesondere durch Schätzung der benötigten Größe des Abtastmusters anhand der Größe des Codebereichs und der geschätzten Modulgröße festgestellt.

Wenn mehrere der hier vorgestellten Schritte gemeinsam umgesetzt werden, ist zu beachten, dass es sich um eine mehrfach geschachtelte Iteration handelt. Die übergeordnete Iteration beginnt mit einem kleinen Abtastmuster vorzugsweise bei einem Finder Pattern und lässt dieses sukzessive über den Codebereich anwachsen. Zur jeweiligen Anpassung wird mehrfach iterativ eine Verschiebematrix bestimmt und angewandt. Es kann eine dritte Iterationsebene innerhalb der Bestimmung einer Verschiebematrix hinzukommen, mit der versucht wird, einen jeweiligen Abtastpunkt schrittweise ins Zentrum seines Moduls zu schieben und so einen einzelnen Eintrag in der Verschiebematrix zu erhalten.

Vorzugsweise wird ein weiteres Abtastmuster von einem anderen Finder Pattern ausgehend bestimmt. Das ist natürlich nur bei Codearten wie dem QR-Code möglich, wo mehrere Finder Pattern vorgesehen sind. Bei anderen Codearten könnte alternativ versucht werden, von einem Bereich aus das Abtastmuster wachsen zu lassen, der zwar kein Finder Pattern ist, dessen Module jedoch in einem früheren Leseversuch oder durch Bildverarbeitung eindeutig erfassbar sind. Dadurch können noch zusätzliche Leseversuche unternommen werden, falls aus irgendeinem Grund das zunächst verwendete Finder Pattern kein günstiger Ausgangspunkt war.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Codelesers;
- Fig. 2: eine Darstellung eines beispielhaften 2D-Codes mit einem an dessen Ver-zerrungen angepasstem Abtastmuster;
- Fig. 3: ein Ablaufschema, wie ein angepasstes Abtastmuster iterativ von einem Fin-der Pattern ausgehend über den gesamten Code wächst;
- Fig. 4: ein Ablaufschema der Anpassung des Abtastmusters innerhalb der jeweili-gen Iterationen nach Figur 3;
- Fig. 5: eine beispielhafte Darstellung von Magnitudenbild und Gradientenbild zu ei-nem Codebereich;
- Fig. 6: eine Vergrößerung zu Figur 6 zu einzelnen Codemoduln; und
- Fig. 7: eine beispielhafte Darstellung von anwachsenden Abtastmustern nach ver-schiedenen Iterationen des Ablaufs gemäß Figur 3.

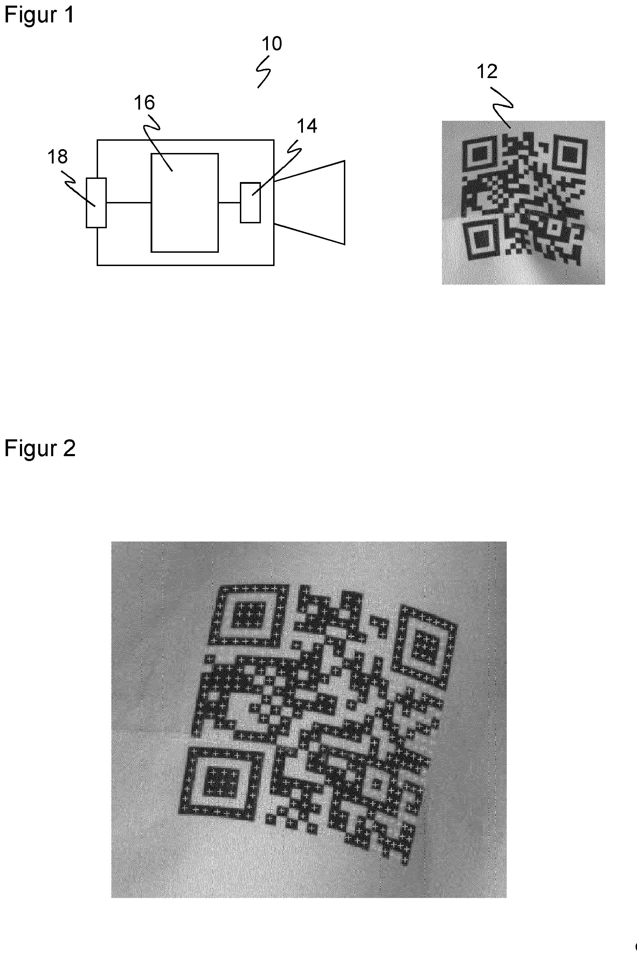

Figur 1 zeigt einen optoelektronischen Codeleser 10 zum Lesen eines rein beispielhaft gezeigten Codes 12. Der Codeleser 10 erfasst mit einem Bildsensor 14 Bilddaten mit dem Code 12, die von einer Steuer- und Auswertungseinheit 16 mittels Bildauswertung und Decodierverfahren weiterverarbeitet werden. Es kommt für die Erfindung nicht auf das konkrete Bildgebungsverfahren an, so dass der Codeleser 10 nach irgendeinem an sich bekannten Prinzip aufgebaut und eingesetzt sein kann. Der Code 12 kann mit einem Einzelbild aufgenommen werden. Im Falle einer Relativbewegung zwischen Codeleser 10 und Code 12 ist auch die Erfassung jeweils nur einer Zeile denkbar, sei es mittels zeilenförmigem Bildsensor oder einem Scanverfahren, wobei im letztgenannten Fall als Bildsensor 14 ein einfacher Lichtempfänger wie eine Photodiode ausreicht. Die Zeilen werden dann zu einem Bild zusammengefügt. Die Relativbewegung entsteht in einer bevorzugten Anwendungssituation durch Montage des Codelesers an einem Förderband, welches die Codes 12 tragenden Objekte durch den Lesebereich des Codelesers 10 fördert

Ziel der Bildverarbeitung der Steuer- und Auswertungseinheit 16 ist, Codebereiche zu erkennen und die dort angebrachten Codes 12 auszulesen. Die Erfindung befasst sich mit einem Teilschritt, mit dem ein Abtastmuster von Abtastpunkten erzeugt wird, das sich an die Verzerrungen des Codes 12 anpasst, die durch Abweichungen von einem ebenen Untergrund entstehen. Das Verfahren, um ein solches Abtastmuster zu erzeugen, wird später unter Bezugnahme auf die Figuren 2 bis 7 näher erläutert. Das eigentliche Codelesen, als das Decodieren anhand der Bilddaten an den Abtastpunkten des Abtastmusters, ist an sich bekannt und wird nicht näher erläutert. Diese bekannten Decodierverfahren können jedoch, abgesehen von allgemeinen Fehlerkorrekturverfahren, mit den Verzerrungen des Codes 12 nicht umgehen.

Über eine Schnittstelle 18 gibt der Codeleser 10 Informationen aus, wie gelesene Codes oder Bilddaten. Es ist auch denkbar, dass die Steuer- und Auswertungseinheit 16 nicht in dem eigentlichen Codeleser 10 angeordnet ist, sondern als eigenes Steuerungsgerät an einen oder mehrere Codeleser 10 angeschlossen wird. Dann dient die Schnittstelle 18 auch als Verbindung zwischen interner und externer Steuerung und Auswertung. Die Steuer- und Auswertungsfunktionalität 16 kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 16 unabhängig von der konkreten Implementierung als Teil des Codelesers 10 aufgefasst.

Die jeweils gezeigten Beispiele von Codes 12 sind QR-Codes. Die Erfindung ist aber darauf nicht beschränkt, sondern auch für andere 2D-Codes anwendbar, wie etwa DataMatrix-Codes, MaxiCodes oder Aztec-Codes. QR-Codes sind in gewisser Weise sogar besonders anspruchsvoll, da sie keine umrahmenden Finder-Pattern aufweisen wie beispielsweise DataMatrix-Codes, die schon gewisse Rückschlüsse auf Deformationen erlauben. Grundsätzlich wären auch Barcodes auf die erfindungsgemäße Weise lesbar. Barcodes sind aber ohnehin schon wesentlich toleranter gegenüber den hier behandelten Verzerrungen, da es genügt, eine einzige Leselinie quer durch den Code zu finden, die noch alle Codemodule schneidet.

Figur 2 zeigt ein Beispiel für das Ergebnis des nun zu beschreibenden Verfahrens zum Auffinden eines an die Deformationen eines Codes 12 angepassten Abtastmusters von Abtastpunkten. Das Abtastmuster folgt den Krümmungen und Deformationen, vorzugsweise indem jeweils genau ein Abtastpunkt mittig in jedem Codemodul angeordnet ist. Anschaulich entspricht das einem regelmäßigen Gitter auf einer flexiblen Unterlage, das auf den Code 12 gelegt wird und sich dessen Unebenheiten anschmiegt.

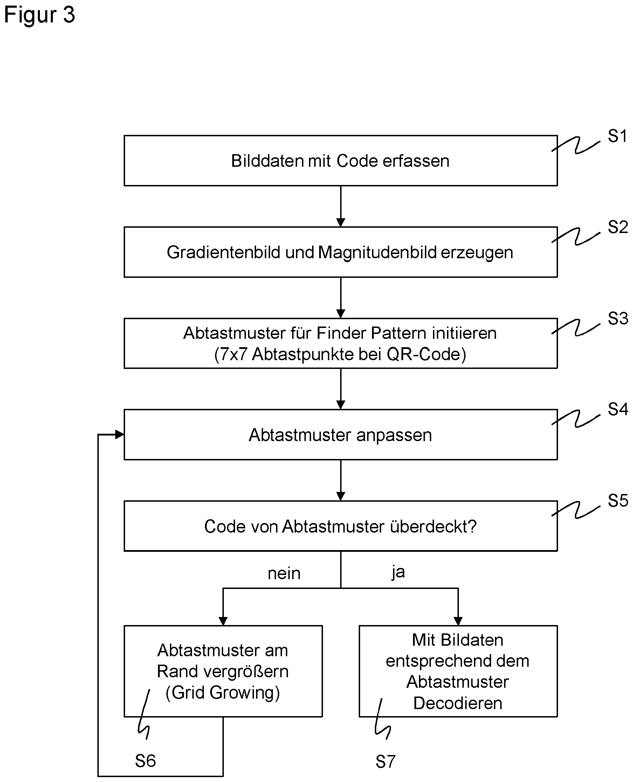

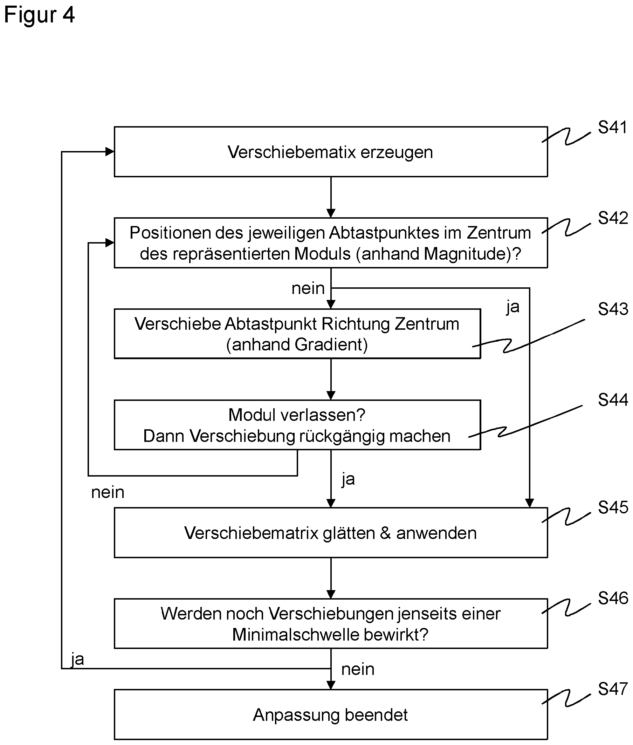

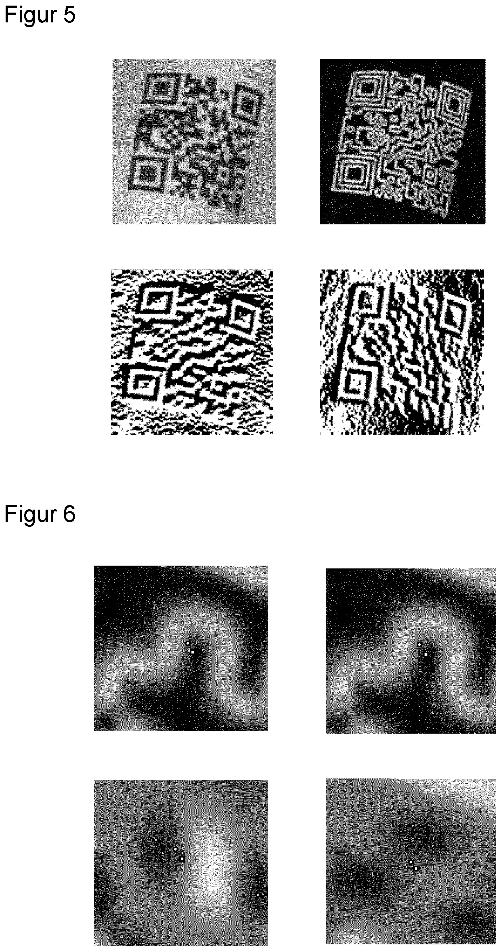

Die Figuren 3 und 4 zeigen einen beispielhaften Ablauf, mit dem dieses Ergebnis erzielt wird. Mit diesem Ablauf wird das Abtastmuster aus den Bilddaten heraus mit einem kleinen Bereich beginnend iterativ und lokal in einer Art selbstorganisiertem, konstruktiven Wachsen erzeugt. Dabei ist Figur 4 ein Ausschnitt, der einen Teilschritt des Ablaufs in Figur 3 näher ausführt. Die Figuren 5 bis 7 illustrieren den Ablauf weiter.

Anfangs werden in einem Schritt S1 die Bilddaten mit dem Code 12 erfasst. Diese Eingabedaten werden beispielsweise als Bilddaten zusammen mit vier Eckpunkten einer in der Vorverarbeitung erkannten Coderegion (ROI, Region of Interest) übergeben. Die Anzahl Zeilen und Spalten für das gesuchte Abtastmuster kann ebenfalls vorgegeben werden. Alternativ werden diese Parameter selbst bestimmt.

In einem Schritt S2 werden ein Gradienten- und ein Magnitudenbild der Coderegion berechnet. Figur 5 zeigt dazu ein Beispiel. Von oben links im Uhrzeigersinn werden das Ausgangsbild der Coderegion, das Magnitudenbild, das Gradientenbild in X-Richtung und das Gradientenbild in Y-Richtung dargestellt.

In einem Schritt S3 wird ein kleines initiales Abtastmuster erzeugt. Das betrifft vorzugsweise den Bereich eines Finder Patterns. Finder Patterns sind bei den in den Figuren gezeigten beispielhaften Codes 12 die drei ineinander angeordneten Rechtecke an den Ecken. Bei einem QR-Code besteht ein Finder Pattern aus 7x7 Codemoduln, so dass dafür ein 7x7 Abtastpunkte großes Abtastmuster geeignet ist. Da keine Informationen über die Krümmung des Codes 12 im Bereich des Finder Patterns vorliegt, ist das initiale Abtastmuster noch regelmäßig. Die Größe des Finder Patterns erlaubt außerdem eine Abschätzung der Modulgröße. Sofern im Schritt S1 keine benötigte Anzahl an Spalten und Zeilen für das Abtastmuster vorgegeben wurde, kann dies anhand der Modulgröße und des Abstands zwischen den Finder Pattern bestimmt werden.

In einem Schritt S4 wird nun das bisher erhaltene Abtastmuster, vorläufig also das initiale Abtastmuster, an die Krümmungen des Codes 12 angepasst. Dieser Schritt ist in Figur 4 nochmals im Detail gezeigt. Anschaulich ist das Ziel der Anpassung, die Abtastpunkte jeweils zentriert in dem von ihnen repräsentierten Modul anzuordnen. Bei einem ebenen Code wird dies mit einem regelmäßigen Gitter für alle Abtastpunkte zugleich erreicht. Bei einem Code 12 auf einer verformten Unterlage wird das Abtastmuster durch individuelle Verschiebungen an die Krümmung angepasst.

Zunächst wird in einem Schritt S41 eine Verschiebematrix initalisiert, die jeweilige Verschiebungen für die anzupassenden Abtastpunkte enthält. Anfangs sind die Werte Null, da noch keine Verschiebungen bestimmt wurden.

Die nächsten Schritte werden für mehrere, vorzugsweise alle Abtastpunkte des Abtastmusters durchgeführt, aber nur stellvertretend für einen Abtastpunkt beschrieben. In einem Schritt S42 wird überprüft, ob der jeweilige Abtastpunkt bereits zentriert ist. Ein vorteilhaftes Kriterium dafür ist eine Überprüfung des zugehörigen Werts im Magnitudenbild. Wenn die Magnitude nämlich einen Wert Null oder sehr nahe Null annimmt, liegt der Abtastpunkt in einem lokalen Extremum der Helligkeit. Darauf kommt es am Ende an, dass alle Abtastpunkte jeweils ein Modul repräsentieren und keine Kanten dazwischen, weniger auf eine mathematisch exakte geometrische Anpassung. Sollten also mehrere Punkte nebeneinander im Magnitudenbild den Wert Null annehmen, so stört es das Ergebnis nicht, wenn eine Verschiebung gewählt wird, die zu einem dieser Punkte führt, der nicht die exakte Mitte des Codemoduls bildet.

Für noch nicht ausreichend zentrierten Abtastpunkte wird in einem Schritt S43 eine Verschiebung in Richtung lokales Extremum oder Zentrum ihres Codemoduls bestimmt. Das wird in Figur 6 illustriert. Hier sind vergrößerte Ausschnitte der in Figur 5 gezeigten Magnituden- und Gradientenbild in gleicher Anordnung in der Umgebung des betrachteten Codemoduls gezeigt. Ein heller kreisförmiger Punkt bezeichnet die gegenwärtige Position des Abtastpunkts, ein heller rechteckiger Punkt die Zielposition bei dem lokalen Extremum. Die Richtung der Verschiebung in ergibt sich aus dem zugehörigen Gradientenbild, der Abtastpunkt folgt also dem größten Helligkeitsanstieg beziehungsweise Helligkeitsabfall. Die einzelne Schrittlänge der Verschiebung ist absichtlich klein gewählt, damit der Abtastpunkt das Codemodul nicht verlässt.

In einem Schritt S44 wird geprüft, ob der Abtastpunkt durch bisherige Verschiebungen das Codemodul verlassen würde. Das könnte vor allem durch mehrere kleine Schritte passieren, wenn mehrere helle oder dunkle Codemodule nebeneinanderliegen. In ein benachbartes Codemodul mit komplementärer Helligkeit würde ohnehin nicht verschoben, weil das in Gegenrichtung zum Gradienten liegt. Würde das Codemodul verlassen, so gilt für diesen Abtastpunkt die Suche nach dem lokalen Extremum als gescheitert, und vorzugsweise wird er dann gar nicht verschoben, sondern bleibt in seiner Ausgangsposition, da die bisherigen Verschiebungen eher eine Verschlechterung als eine Verbesserung erwarten lassen. Andernfalls wird die Suche nach dem lokalen Extremum im Schritt S42 fortgesetzt, wo zunächst geprüft wird, ob die letzte Verschiebung schon dorthin führte und ansonsten mit Schritt S43 ein weiterer kleiner Verschiebungsschritt versucht wird.

Ist die Schleife der Schritte S42 bis S44 für alle Abtastpunkte beendet, so ist die Verschiebematrix mit Werten besetzt, die einen Teil der Abtastpunkte in das lokale Extremum und den übrigen Teil nach gescheiterter Suche gar nicht verschiebt. In einem Schritt S45 wird die Verschiebematrix geglättet, insbesondere mit einem Gaussfilter. Das führt nicht nur zu einem insgesamt gleichmäßigeren Gitter, sondern sorgt auch dafür, dass die Abtastpunkte, für die individuell keine geeignete Verschiebung bestimmt werden konnte, anhand ihrer Nachbarschaft doch mit verschoben werden.

Nachdem die Verschiebungen der Verschiebematrix auf das bisherige Abtastmuster angewandt sind, wird nun in einem Schritt S46 wird geprüft, ob überhaupt noch nennenswerte Verschiebungen jenseits einer Minimalschwelle bewirkt werden. Wenn das nämlich nicht mehr der Fall ist und die Abtastpunkte nicht mehr bewegt werden, wird ein Konvergieren angenommen und die Anpassung in einem Schritt S47 beendet. Ansonsten wird die Verschiebung iterativ im Schritt S41 wiederholt. Als alternatives Abbruchkriterium kann eine Höchstzahl Iterationen einschließlich nur einer Iteration vorgegeben werden.

Zurück zu Figur 3, ist damit der Anpassungsschritt S4 abgeschlossen. Nun wird in einem Schritt S5 geprüft, ob das angepasste Abtastmuster bereits den Code überdeckt. Die geforderte Größe des Abtastmusters wurde in Schritt S1 vorgegeben oder anhand von Schätzungen wie der Modulgröße beziehungsweise Position und Abstand von Finder Pattern selbst bestimmt. Solange das nicht der Fall ist, wird in einem Schritt S6 das Abtastmuster iterativ erweitert und die jeweils Anpassung ab Schritt S4 für das gesamte Abtastmuster, für die neu hinzugekommenen Abtastpunkte oder für die neu hinzugekommenen Abtastpunkte und einige ältere Abtastpunkt insbesondere aus der Nachbarschaft der Erweiterung wiederholt.

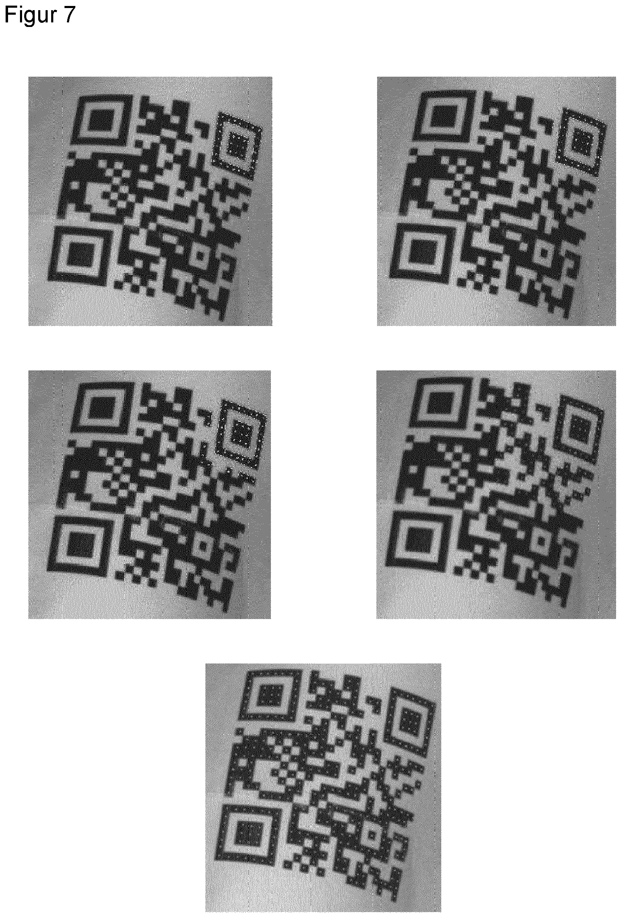

Figur 7 illustriert, wie das Abtastmuster mit den Iterationen gemäß Schritt S6 anwächst. Oben links ist die Ausgangssituation gezeigt, in der nur das Finder Pattern von dem Abtastmuster erfasst ist. Oben rechts und in der Mitte link kommen nach der ersten beziehungsweise zweiten Iteration jeweils eine Zeile und Spalte hinzu. Die Erweiterung erfolgt beispielsweise anfangs durch Anfügen von Abtastpunkten im Abstand der geschätzten Modulgröße. Dafür gibt es nun zusätzliche Schätzgrundlagen aus dem bisherigen Abtastmuster. Beispielsweise wird ein neuer Abtastpunkt im selben Abstand hinzugefügt, wie ihn seine schon angepassten benachbarten Abtastpunkte aufweisen, oder entsprechend einem Mittelwert in Zeilen- oder Spaltenrichtung der zugehörigen Zeile oder Spalte. Eine Anpassung an die Krümmung erfolgt erst durch den danach durchgeführten Schritt S4.

In der Mitte rechts von Figur 7 ist noch als beliebig herausgegriffene Bearbeitungsstufe die siebte Iteration gezeigt. Unten wird abschließend das vollständige Abtastmuster dargestellt. Dies entspricht der Figur 2.

Mit den Bilddaten an den Abtastpunkten des angepassten Abtastmusters wird nun in einem Schritt S7 versucht, den Code 12 zu lesen. Bei Erfolg ist das Ziel erreicht. Andernfalls können weitere Decoder versucht werden. Bei einem QR-Code mit mehreren Finder Pattern kann das gesamte Verfahren mit einem anderen Finder Pattern wiederholt werden. Solche zusätzlichen Versuche sind vor allem bei starken Verformungen hilfreich, um die Leserate nochmals zu steigern.

Andere 2D-Codearten nutzen andere Finder Pattern. Bei einem DataMatrix-Code kann das L-Muster von einer oder beiden Kanten ausgehend anwachsen. Ein Maxi- oder Aztec-Code weist jeweils ein zentrales Finder Pattern auf, das als Ausgangspunkt dienen kann. Gibt es wie in diesen Beispielen nur ein Finder Pattern, so sind dennoch mehrere Versuche denkbar, ein Abtastmuster zu bilden. Dafür wird eine andere Region, die kein Finder Pattern ist, als Startregion verwendet, insbesondere eine solche, in der die Codemodule schon zuverlässig erkannt sind, sei es aus früheren Leseversuchen oder weil der Code 12 dort weitgehend eben ist.

Es sei noch darauf hingewiesen, dass auch schon ganz am Anfang vor Anpassung eines Abtastmusters ein erster Leseversuch unternommen werden kann. Womöglich gelingt es dabei schon, den Code 12 zu lesen, insbesondere wenn der konkret zu bearbeitende Code 12 wenig oder gar nicht verzerrt ist.

## Patentansprüche

1. Verfahren zum Lesen von optischen Codes (12), insbesondere 2D-Codes, mit Verzerrungen durch einen unebenen Untergrund des Codes (12), wobei Bilddaten mit dem Code (12) aufgenommen werden, in den Bilddaten ein Bereich mit dem Code (12) aufgefunden und daraus der Codeinhalt des Codes (12) gelesen wird,
**dadurch gekennzeichnet,**
**dass** der Code (12) aus Bilddaten an Abtastpunkten gelesen wird, die in einem Abtastmuster entsprechend den Verzerrungen angeordnet sind, wobei das Abtastmuster anhand der Bilddaten lokal an den verzerrten Code angepasst wird.

2. Verfahren nach Anspruch 1,
wobei das Abtastmuster ohne Kenntnis der Krümmung des unebenen Untergrundes bestimmt wird.

3. Verfahren nach Anspruch 1 oder 2,
wobei eine Modulgröße des Codes (12) und/oder eine Größe des benötigten Abtastmusters aus einem Finder Pattern bestimmt wird.

4. Verfahren nach einem der vorhergehenden Ansprüche,
wobei das Abtastmuster einen Abtastpunkt je Modul des Codes (12) aufweist.

5. Verfahren nach einem der vorhergehenden Ansprüche,
wobei das Abtastmuster iterativ von einem Finder Pattern ausgehend vergrößert wird, bis es den Code (12) überdeckt.

6. Verfahren nach einem der vorhergehenden Ansprüche,
wobei anfänglich Abtastpunkte des Abtastmusters für das Finder Pattern festgelegt werden, insbesondere noch in regelmäßiger Anordnung entsprechend einem planen Untergrund.

7. Verfahren nach einem der vorhergehenden Ansprüche,
wobei die Abtastpunkte jeweils ins Zentrum des von ihnen repräsentierten Moduls verschoben werden.

8. Verfahren nach Anspruch 7,
wobei ein Gradientenbild und ein Magnitudenbild des Codes (12) berechnet wird, um anhand des Magnitudenbildes festzustellen, ob ein jeweiliger Abtastpunkt in einem lokalen Extremum liegt und die Richtung einer noch erforderlichen Verschiebung aus dem Gradientenbild zu bestimmen.

9. Verfahren nach Anspruch 7 oder 8,
wobei eine Verschiebung in Schritten kleiner als die Modulgröße versucht wird, bis ein lokales Extremum erreicht ist, die Verschiebung aus dem Modul herausführen würde oder eine Maximalzahl von Schritten versucht wurde, wobei insbesondere keine Verschiebung des jeweiligen Abtastpunktes erfolgt, wenn kein lokales Extremum gefunden werden konnte.

10. Verfahren nach einem der Ansprüche 7 bis 9,
wobei eine Verschiebematrix von Verschiebungen der jeweiligen Abtastpunkte in ein lokales Extremum geglättet wird, insbesondere mit einem Gaussfilter.

11. Verfahren nach einem der Ansprüche 7 bis 10,
wobei iterativ so lange eine neue Verschiebematrix mit Verschiebungen von Abtastpunkten in ein lokales Extremum bestimmt und jeweils auf das Abtastmuster angewandt wird, bis eine weitere Verschiebematrix keine Verschiebungen oberhalb einer Toleranzschwelle mehr bewirkt oder bis eine maximale Anzahl Iterationen erreicht ist.

12. Verfahren nach einem der vorhergehenden Ansprüche,
wobei das Abtastmuster iterativ an mindestens einem Rand mit zusätzlichen Abtastpunkten vergrößert wird, bis es den Code (12) überdeckt und/oder eine vorgegebene Größe erreicht.

13. Verfahren nach einem der vorhergehenden Ansprüche,
wobei ein weiteres Abtastmuster von einem anderen Finder Pattern ausgehend bestimmt wird.

14. Codelesevorrichtung (10) zum Lesen von optischen Codes (12), insbesondere 2D-Codes, mit Verzerrungen durch einen unebenen Untergrund des Codes (12), wobei die Codelesevorrichtung (10) einen Bildsensor (14) zum Aufnehmen von Bilddaten mit dem Code (12) und eine Steuer- und Auswertungseinheit (16) aufweist, die dafür ausgebildet ist, in den Bilddaten einen Bereich mit dem Code (12) aufzufinden daraus den Codeinhalt des Codes (12) zu lesen,
**dadurch gekennzeichnet,**
**dass** die Steuer- und Auswertungseinheit (16) weiterhin dafür ausgebildet ist, den Code (12) aus Bilddaten an Abtastpunkten zu lesen, die in einem Abtastmuster entsprechend den Verzerrungen angeordnet sind, wobei das Abtastmuster anhand der Bilddaten lokal an den verzerrten Code angepasst wird.

## Claims

1. A method for reading optical codes (12), in particular 2D codes, having distortions due to an uneven background of the code (12), wherein image data including the code (12) are acquired, an area including the code (12) is located in the image data, and the code content of the code (12) is read from that, **characterized in that** the code (12) is read from image data at sampling points that are arranged in a sampling pattern corresponding to the distortions, the sampling pattern being adapted locally to the distorted code on the basis of the image data.

2. The method according to claim 1,
wherein the sampling pattern is determined without knowledge of the curvature of the uneven background.

3. The method according to claim 1 or 2,
wherein a module size of the code (12) and/or a size of the required sampling pattern is determined from a finder pattern.

4. The method according to any of the preceding claims,
wherein the sampling pattern comprises one sampling point per module of the code (12).

5. The method according to any of the preceding claims,
wherein the sampling pattern is iteratively extended starting from a finder pattern until it covers the code (12).

6. The method according to any of the preceding claims,
wherein sampling points of the sampling pattern are initially determined for the finder pattern, in particular still in a regular arrangement corresponding to a planar background.

7. The method according to any of the preceding claims,
wherein the sampling points are each shifted to the centre of the module they represent.

8. The method according to claim 7,
wherein a gradient image and a magnitude image of the code (12) are calculated in order to determine whether a respective sampling point lies in a local extremum from the magnitude image and to determine the direction of a shift still required from the gradient image.

9. The method according to claim 7 or 8,
wherein a shift is attempted in steps smaller than the module size until a local extremum is reached, the shift would lead out of the module, or a maximum number of steps has been attempted, wherein in particular no shift of the respective sampling point takes place if no local extremum could be found.

10. The method according to any of claims 7 to 9,
wherein a shift matrix of displacements of the respective sampling points is smoothed into a local extremum, in particular with a Gaussian filter.

11. The method according to any of claims 7 to 10,
wherein a new shift matrix with shifts of sampling points to a local extremum is determined iteratively and respectively applied to the sampling pattern until a further shift matrix no longer causes shifts above a tolerance threshold or until a maximum number of iterations is reached.

12. The method according to any of the preceding claims,
wherein the sampling pattern is iteratively extended at at least one edge with additional sampling points until it covers the code (12) and/or reaches a predetermined size.

13. The method according to any of the preceding claims,
wherein a further sampling pattern is determined starting from another finder pattern.

14. A code reading apparatus (10) for reading optical codes (12), in particular 2D codes, having distortions due to an uneven background of the code (12), the code reading device (10) comprising an image sensor (14) for acquiring image data including the code (12) and a control and evaluation unit (16) configured to find an area including the code (12) in the image data and to read the code content of the code (12) from that,
**characterized in that** the control and evaluation unit (16) is further configured to read the code (12) from image data at sampling points arranged in a sampling pattern corresponding to the distortions, the sampling pattern being locally adapted to the distorted code on the basis of the image data.

## Revendications

1. Procédé de lecture de codes optiques (12), en particulier de codes 2D, ayant des distorsions dues à un arrière-plan irrégulier du code (12), dans lequel des données d'image incluant le code (12) sont acquises, une zone incluant le code (12) est localisée dans les données d'image, et le contenu du code (12) est lu à partir de celle-ci,
**caractérisé en ce que** le code (12) est lu à partir des données d'image à des points d'échantillonnage qui sont disposés dans un type d'échantillonnage correspondant aux distorsions, le type d'échantillonnage étant adapté localement au code déformé sur la base des données d'image.

2. Procédé selon la revendication 1,
dans lequel le type d'échantillonnage est déterminé sans connaissance de la courbure du fond irrégulier.

3. Procédé selon la revendication 1 ou 2,
dans lequel une taille de module du code (12) et/ou une taille du type d'échantillonnage requis est déterminée à partir d'un structure de recherche.

4. Procédé selon l'une des revendications précédentes,
dans lequel le type d'échantillonnage comprend un point d'échantillonnage par module du code (12).

5. Procédé selon l'une des revendications précédentes,
dans lequel le type d'échantillonnage est étendu de manière itérative en partant d'un structure de recherche jusqu'à ce qu'il couvre le code (12).

6. Procédé selon l'une des revendications précédentes,
dans lequel des points d'échantillonnage du type d'échantillonnage sont initialement déterminés pour le structure de recherche, en particulier toujours selon une disposition régulière correspondant à un fond plan.

7. Procédé selon l'une des revendications précédentes,
dans lequel les points d'échantillonnage sont chacun décalés vers le centre du module qu'ils représentent.

8. Procédé selon la revendication 7,
dans lequel une image de gradient et une image d'amplitude du code (12) sont calculées afin de déterminer si un point d'échantillonnage respectif se trouve dans un extremum local de l'image d'amplitude et de déterminer la direction d'un décalage encore nécessaire à partir de l'image de gradient.

9. Procédé selon la revendication 7 ou 8,
dans lequel un décalage est tenté par étapes plus petites que la taille du module jusqu'à ce qu'un extremum local soit atteint, que le décalage conduise hors du module, ou qu'un nombre maximum d'étapes ait été tenté, dans lequel en particulier aucun décalage du point d'échantillonnage respectif n'a lieu si aucun extremum local n'a pu être trouvé.

10. Procédé selon l'une des revendications 7 à 9,
dans lequel une matrice de décalage des déplacements des points d'échantillonnage respectifs est lissée en un extremum local, en particulier avec un filtre gaussien.

11. Procédé selon l'une des revendications 7 à 10,
dans lequel une nouvelle matrice de décalage avec des décalages de points d'échantillonnage vers un extremum local est déterminée de manière itérative et appliquée respectivement au type d'échantillonnage jusqu'à ce qu'une autre matrice de décalage ne provoque plus de décalages au-dessus d'un seuil de tolérance ou jusqu'à ce qu'un nombre maximal d'itérations soit atteint.

12. Procédé selon l'une des revendications précédentes,
dans lequel le type d'échantillonnage est étendu de manière itérative au niveau d'au moins un bord avec des points d'échantillonnage supplémentaires jusqu'à ce qu'il couvre le code (12) et/ou atteigne une taille prédéterminée.

13. Procédé selon l'une des revendications précédentes,
dans lequel un autre type d'échantillonnage est déterminé à partir d'un autre structure de recherche.

14. Dispositif de lecture de code (10) pour lire des codes optiques (12), en particulier des codes 2D, ayant des distorsions dues à un arrière-plan irrégulier du code (12), le dispositif de lecture de code (10) comprenant un capteur d'image (14) pour acquérir des données d'image incluant le code (12) et une unité de commande et d'évaluation (16) configurée pour trouver une zone incluant le code (12) dans les données d'image et pour lire le contenu du code (12) à partir de celle-ci,
**caractérisé en ce que** l'unité de commande et d'évaluation (16) est en outre configurée pour lire le code (12) à partir des données d'image à des points d'échantillonnage disposés dans un type d'échantillonnage correspondant aux distorsions, le type d'échantillonnage étant adapté localement au code déformé sur la base des données d'image.
